# EUROPEAN PATENT APPLICATION

(11) **EP 3 104 156 A1**
(43) Date of publication of application: **14.12.2016**
(21) Application number: 15171641.2
(22) Date of filing: 11.06.2015
(51) Int. Cl.: G01N 1/40, G01N 30/60

(54) **METHOD OF EXTRACTION**

(71) Applicant: Biotage AB, 751 03 Uppsala (SE)
(72) Inventor: Baek, Sung, 751 03 Uppsala (SE)
(74) Representative: Brann AB

(57) **Abstract**

The present invention relates to a method of supported liquid extraction (SLE), wherein adsorption of an aqueous sample onto an inert aqueous phase is performed in the presence of added salt. More specifically, one or more analytes may be extracted by contacting an organic phase comprising at least one polar solvent with the inert phase.

## Description

### Technical field

The present invention relates to the field of separation of analytes of interest from liquid samples. More specifically, the invention relates to a novel method of performing supported liquid extraction (SLE) and to a cartridge which may be used in the method according to the invention.

### Background

In the current fast moving development of technologies for the separation of molecules of interest from biological liquids, conventional principles are often used as a starting point to develop enhanced methods suitable for analysis with high requirement of perfection.

Water, such as drinking water, has been purified by man for hundreds of years, and water purification remains an important area that constantly requires improvements. Filtering of water can be performed in many ways, one of which as a filtration aid utilizes diatomaceous earth, also known as diatomite, or kieselgur. It is a naturally occurring, soft, siliceous sedimentary rock that is easily crumbled into a fine white to off-white powder with a particle size ranging from less than 3 micrometers to more than 1 millimetre. The typical chemical composition of oven-dried diatomaceous earth is 80 to 90% silica, with 2 to 4% alumina and 0.5 to 2% iron oxide.

More recently, thanks to its unique properties allowing a simple and relatively fast phase separation if used with a water-immiscible solvent, diatomaceous earth has been included into products developed for the preparation of biological liquid samples prior to analysis. As such separation takes place at the aqueous surface of the diatomaceous earth, this separation principle is commonly referred to as supported liquid extraction (SLE), and sometimes solid-supported liquid extraction or solid-liquid extraction.

SLE is similar to classical liquid-liquid extraction (LLE), but in SLE the aqueous phase is coated onto the diatomaceous earth and instead of shaking the immiscible phases together, the organic phase is usually passed through a column or cartridge holding the diatomaceous earth. SLE is currently regarded as more attractive than LLE for many analytical applications thanks to the greater surface area provided by the support phase and its simplicity in performance. Commercial packed cartridge products are available for SLE, such as ISOLUTE® SLE+ (Biotage), Aquamatrix (Orochem Ontario, CA) and Chem Elut (Agilent) marketed for extraction of a diverse range of analytes such as hormones, drugs and drug metabolites from aqueous samples such as biological fluids, including whole blood, plasma, serum, urine and oral fluid. US 5,603,160 (Phoenix International Life Sciences Inc) relates to a method for making an extraction cartridge as well as a processing system which automatically processes a plurality of cartridges. An extraction process is described, which includes adding a sample into the extraction cartridge, waiting a predetermined time, adding a predetermined amount of solvent and collecting the solvent in a collection tube.

### Summary of the invention

One object of the present invention is to provide an alternative method of supported liquid extraction (SLE). This can be achieved as described in the appended claims. Another object of the invention is to provide a novel format of a cartridge for performing SLE. Such a cartridge is described by the appended claim.

Further objects and advantages will appear from the dependent claims as well as from the detailed disclosure that follows.

### Definitions

The term "Supported Liquid Extraction" commonly abbreviated "SLE" is used in its conventional meaning in this field and means partitioning between an aqueous layer, immobilized on a solid support and elution by an aqueous-immiscible solvent.

The term "diatomaceous earth", also known as diatomite or kieselgur, can be obtained commercially, such as Celite™ from Sigma Aldrich. It is understood that the term "diatomaceous earth" as used herein will include chemical modifications thereof, provided its advantageous properties for use in SLE are not changed to any substantial extent.

The term "polar solvent" is used herein for an organic solvent chosen based on selectivity of the components present in the sample. The term "polar" is understood to be of a higher polarity than solvents conventionally used for SLE at the date of this patent application.

The term "sample preparation" or "sample prep" is a phrase commonly used in the area of science to describe the preparation of a liquid sample to render it in a condition required for selected downstream analysis.

The term "biological" liquid sample means herein that the liquid is of biological origin. Thus, it may be as biological liquid as such, or a diluted, filtered or otherwise processed liquid.

The term "analyte" is used herein to denote any molecule or compound which is the target of an extraction in accordance with the invention. Illustrative examples of analytes of interest includes drugs, drug metabolites,

### Brief description of the drawings

Figure 1 shows a protein precipitation extraction (PPT) of testosterone from serum described in Example 1.
Figure 2 shows an extraction using conventional SLE+ from a serum matrix and the effects of using a polar organic solvent, acetonitrile, and the resulting phospholipids
Figure 3 shows the removal of endogenous phospholipids when using the invention; 3-layered column (salt- SLE+ material-PLD+ material). The same methodology to produce Figure 2 was used to compare.
Figure 4 shows a representable chromatrogram of spiked standards at 200ng/mL into blank solution; increasingly polar analytes from right to left.
Figure 5 shows a representable chromatogram of an extraction from serum at 200ng/mL using the invention; three layered column (salt-SLE+-PLD+) and polar organic solvent, acetonitrile as the elution solvent. Fig 5 is to be compared to Fig 4 (the 100% recovery intensities).

### Detailed description of the invention

A first aspect of the present invention is a method of supported liquid extraction (SLE), wherein adsorption of an aqueous sample onto a solid phase is performed in the presence of added salt. In this context, "added" salt is understood to mean that the sample contains more salt than it did originally. For example, a biological sample such as urine would have a higher salt content than it did in its natural state. As will appear from other parts of the present application, the addition of salt in according to the invention is made in order to change the extraction properties. Without wishing to be bound by any theory, it appears that by elevating the salt content of the sample as compared to an untreated sample, the method according to the invention allows using a broader spectrum of solvents, such as more polar solvents, in the subsequent extraction step.

Thus, in one embodiment of the method according to the invention, one or more analytes are extracted from the bound aqueous phase by contacting an organic phase comprising at least one polar solvent or a mixture of solvents with the bound aqueous phase.

Thus, more specifically, the first aspect of the invention is a method which comprises the steps of
a) providing an aqueous sample comprising one or more analytes;
b) saturating the biological sample with a salt that is layered on top of the SLE+
c) contacting the biological sample to bind it the solid support (SLE) contained underneath or mixed into the solid support in a cartridge or plate; followed by a phospholipid scavenging sorbent.
d) allowing sufficient time for the sample to adsorb to the solid support; and
e) passing an organic phase comprising at least one polar solvent or mixture of solvents through the solid support phase to extract at least one analyte;
wherein salt or solutions of such may be added in step a) and/or b).

In an advantageous embodiment of the method, the solid support phase comprises diatomaceous earth and/or polymeric solid support. As the skilled person will appreciate, the diatomaceous earth and/or polymeric solid support may be combined with conventional inert support materials. A specific example of a solid support phase is ISOLUTE SLE+ (Biotage).

The sample may be contacted with the salt in any suitable way, such as by contact with a salt liquid, preferably saturated with respect to salt; or mixed e.g. by stirring with a dry salt. Alternatively, or additionally, a liquid aqueous sample is passed across a bed comprising salt before being contacted with the solid support phase.

The salt may be any salt that provides the desired effect described herein without having a negative impact on the analyte(s) present in the sample. Thus, the salt may be selected from sodium chloride, potassium chloride, zinc chloride, zinc sulphate, sodium/potassium phosphate (mono basic or di basic or combinations of these), sodium bicarbonate, sodium carbonate, sodium hydroxide, potassium hydroxide, sodium acetate, sodium formate, ammonium sulphate, HCl salts, sulphonic acid salts, nitric acid salts, phosphoric acid salts, ion pairing agents such as dibutyl ammonium acetate, trifluoroacetic acid salts. In an advantageous embodiment, the salt is sodium chloride.

As the skilled person will know, the H₂O portion from all biological samples such as urine, blood or plant extract incurs a competition to molecules surrounding it. Molecules that possess a greater affinity or solubility into H₂O will out-compete analytes that are organic in nature. Also, since H₂O has limited capacity to retain molecules, it eventually becomes saturated, which prevents other molecules with less affinity from reducing its solubility into the same volume of H₂O. In fact, the ionic strength of salts only plays the role of how well it solubilizes in H₂O. For example, although acetonitrile is completely miscible with H₂O (another words, any combination of either solvents can mix homogenously), when saturation of H₂O occurs with salts, very little if any of the acetonitrile can effectively become soluble in the salt saturated H₂O, thereby creating a partition between the 2 solvent layers.

In one embodiment, said at least one polar solvent is selected from the group consisting of acetonitrile; isopropyl alcohol, ethyl acetate, methyl tert-butyl ether, toluene, petroleum ether, acetone, dimethyl formate, dimethoxysulphate, dichlormethane, hexanes, heptanes, pentanes, tetrahydrofuran, ethyl alcohol, methanol, butyl alcohols; or a mixture of two or more thereof. The combination of polar organic solvents may be reduced in its polarity through the addition of a less polar organic solvent to provide a reduction of endogenous interferences; or the combination of a polar organic solvent with a more polar organic solvent may provide a higher polarity level to improve recoveries. The combination must afford a partition between a salt saturated biological sample as to minimize the combined elution of endogenous interferences.

More specifically, in traditional SLE protocol and the necessity of the partition between the aqueous layer and immiscible layer, conventional solvents that are not miscible with water at Standard Temperatures and Pressures (STP -room temperature 20°C and atmospheric pressure equal to 1) have been employed. Typical solvents used from non-polar to polar are Pentane, Hexanes, Heptane, Methyl Tert-Butyl Ether (MTBE), Dichloromethane (DCM), Toluene, Ethyl Acetate. As is well known, in chemistry, the term "polarity" refers to a separation of electric charge leading to a molecule or its chemical groups having an electric dipole or multipole moment. Polar molecules interact through dipole-dipole intermolecular forces and hydrogen bonds. Molecular polarity is dependent on the difference in electronegativity between atoms in a compound and the asymmetry of the compound's structure. Polarity underlies a number of physical properties including surface tension, solubility, and melting and boiling-points.

Thus, more polar organic solvents that have a high level of solubility and or are completely miscible in water may partition from it through the use of saturation of the aqueous layer with salts. For example, although acetonitrile is miscible with water, it can become immiscible when the aqueous layer becomes saturated with salts. In light of these characteristics, organic polar analytes that are polar can partition into acetonitrile when the aqueous layer becomes saturated with salts; where organic polar analytes may not partition into less polar solvents such as those used in traditional SLE.

The sample subjected to SLE in accordance with the present invention may be any liquid sample which comprises at least one analyte of interest, such as a liquid sample or a dried sample. The skilled person can easily determine is a certain sample and analyte are suitable for this kind of processing. The sample is preferably biological, such as a human or animal originating sample, and may be selected from the group consisting of plant, food, environmental, petroleum, urine; saliva; whole blood; and blood serum.

As is well known, procedures such as SLE may under certain circumstances release other components than the desired analyte. For example, certain pH ranges may for some biological sample release e.g. fatty materials, an example of which being phospholipids. As is well known, phospholipids may be undesired in an extract as they may disturb subsequent steps of analysis, such as a subsequent GC-MS/FID/Head Space/Electrochemical, LC-MS/UV/FL/Electrochemical/conductivity/RI, tandem MS or LC-MS/MS.

Thus, in one embodiment, the method according to the invention also comprises a step of removing additional components such as proteins, peptides and/or phospholipids from the extract resulting from step C). This may be achieved by using a separation matrix specifically designed to remove such components, using separation principles such as ion exchange, hydrophobic interactions and/or mixed mode interactions. An illustrative example of a commercially available product capable of removing phospholipids is ISOLUTE PLD+ (Biotage), Hybrid SPE (Sulpelco/Sigma Aldrich), Ostro (Waters), PHREE (Phenomenex), Captiva ND Lipids plate (Agilent), HyperSep (Thermo).

In terms of equipment, the method according to the invention is advantageously performed as conventional SLE, i.e. in an elongated container or barrel, such as a column, cartridge or plate, which allows the sample to be dispersed throughout by gravity, as well as the passing of the organic phase at a controlled flow rate of 1mL/min either through gravity or such equipment as vacuum and/or positive pressure. Thus, a second aspect of the invention is a cartridge for supported liquid extraction (SLE), which includes at least two separate compartments, one of which holds a solid support phase and one of which holds a salt or mixture of salts. In this context, "separate" means that the compartments are sufficiently separated to allow for the sample to first pass one compartment and then pass the other. As the skilled person will understand, such separate compartments may be obtained by providing different layers separated by a suitable partitioning.

In one embodiment of the cartridge according to the invention, an opening for feeding a liquid into the cartridge is provided, which opening is directly connected to the salt compartment. In this context, "directly" means that no other compartment including separation media is provided in between. However, as the skilled person will appreciate, there may be a filter/frit or a separate plate with salts, a partitioning wall or even tubing provided depending on how the cartridge is prepared.

In one embodiment, the cartridge contains an outlet for removing liquid where the outlet is connected to the solid support phase compartment.
As the skilled person will understand, the inlet will be used first to add the liquid sample, and possibly salt liquid, and in a subsequent step to add the organic phase applied to extract analyte(s) from the aqueous phase. The outlet will be used to release extracted polar solvent comprising one or more analyte(s) of interest.

In a specific embodiment, the cartridge according to the invention includes an additional compartment holding an additional inert phase capable of capturing, retaining or binding other non-analyte endogenous sample components such as proteins, peptides and/or phospholipids. The material may be in ion exchange media, a hydrophobic interaction media and/or a mixed mode media. As mentioned above, an illustrative such material is ISOLUTE PLD+ (Biotage).

In one embodiment, the additional compartment is located between the solid support phase compartment and the outlet, i.e. after the SLE in terms of processing order. In one embodiment, the cartridge comprises filters at the inlet and/or outlet end(s). As the skilled person will understand, other conventionally used elements such as valves and tubing may also be integral parts of the cartridge according to the invention.
In an advantageous embodiment, the second aspect of the invention is a cartridge or plate column which has a upper compartment holding ISOLUTE SLE+ (Biotage) and a lower compartment holding PLD+ (Biotage), and preferably a salt compartment including e.g. sodium chloride above i.e. before in terms of processing order to the ISOLUTE SLE+. This embodiment is advantageously used to process aqueous biological samples such as hormones, drugs or drug metabolites in blood, serum or urine as a step preceding subsequent analysis by GC-MS/FID/Head Space/Electrochemical, LC-MS/UV/FL/Electrochemical/conductivity/RI, tandem MS or LC-MS/MS.

In summary, it is to be understood that all details regarding the first aspect of the invention may be applied to the second aspect as discussed above.

### Detailed description of the drawings

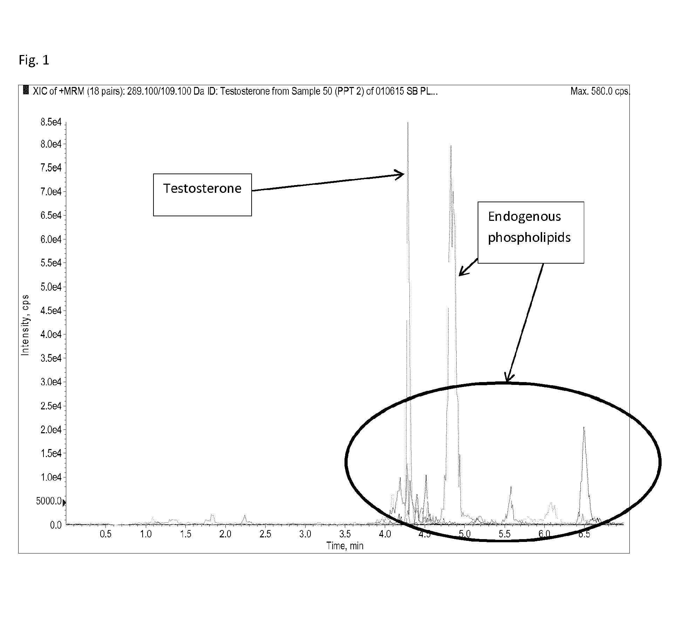

Figure 1 shows a chromatogram of testosterone along with phospholipids following a protein precipitation extraction (PPT) from serum. It is well known that PPT removes endogenous proteins, however the strategy does not remove phospholipids. The chromatogram shows the region for phospholipids between 3.7 minutes to 7 minutes

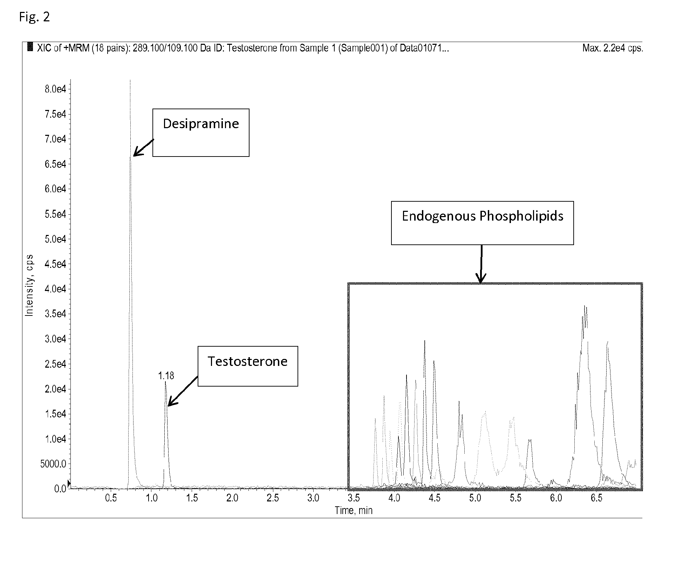

Figure 2 shows an extraction using conventional SLE+ from a serum matrix and the effects of using a polar organic solvent, acetonitrile. The representable chromatogram of despramine and testosterone with retention time at 0.7 minutes and testosterone with retention time at 1.18 minutes. The region between approximately 3.7 minutes to 7 minutes demonstrates the elution of unwanted endogenous phospholipids when using acetonitrile as the elution solvent in conventional SLE+, a prior art.

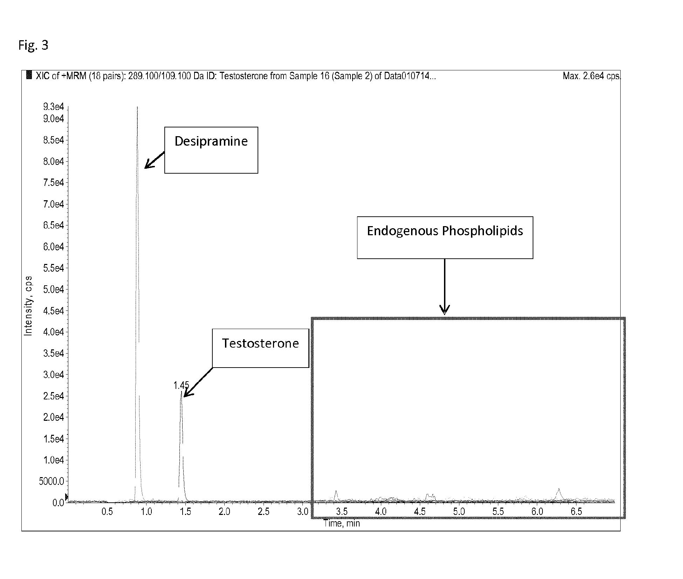

Figure 3 shows a comparable chromatogram of an extraction according to invention using a 3-layered column (salt- SLE+ material-PLD+ material). It demonstrates the effective removal of unwanted endogenous phospholipids from a serum matrix, while affording similar recoveries and lower abundance of endogenous phospholipids relative to the conventional SLE+ (Figure 2) even when a polar organic solvent, acetonitrile was used.

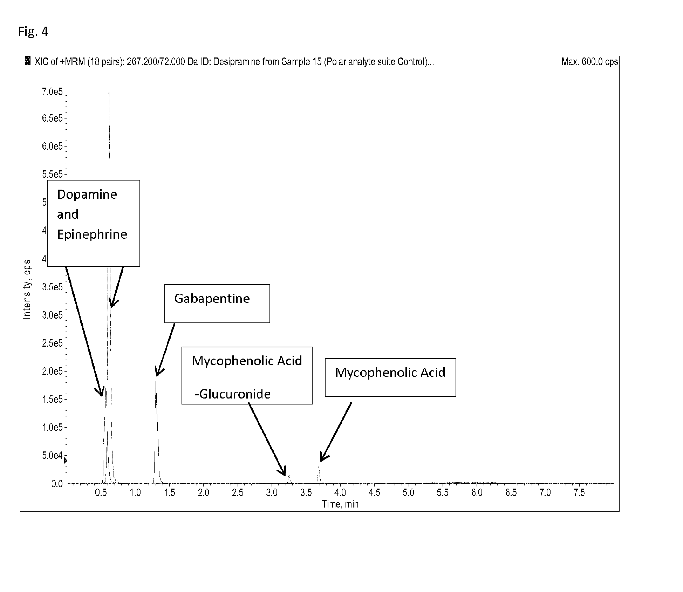

Figure 4 shows a representable chromatrogram of spiked standards at 200ng/mL into blank solvent; increasing polar analytes from right to left. Retention times are as follows: Dopamine and Epinephrine are the most polar at a retention time of 0.6 minutes and 0.7 minutes, Gabapentine elutes at 1.3 minutes, Mycophenolic Acid - Glucuronide elutes at 3.25 minutes, Desipramine elutes at 3.45 minutes (this was later added) and Mycophenolic Acid is the least polar analyte in this suite and elutes at 3.7 minutes.

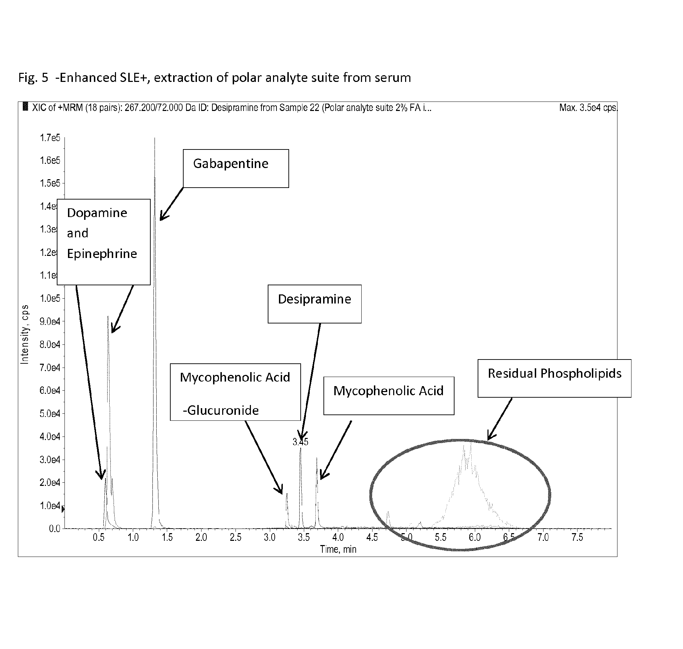

Figure 5 shows a representable chromatogram of an extraction of polar analyte suite (fig 4) from stripped serum, using the invention with its three layered column (salt-SLE+-PLD+) and polar organic solvent, acetonitrile as the elution solvent. When compared to the spiked standards at the same concentration of 200ng/mL (Figure 4), the most polar analytes Dopamine and Epinephrine shows a lower recoveries, however polar analytes Gabapentine, Mycophenolic Acid-Glucuronide, Desipramine and Mycophenolic acid shows 90+% recoveries, while significantly reducing endogenous phospholipids trace when compared to using the conventional SLE+ with acetonitrile (Figure 2). In conventional SLE+, the most polar solvent recommendation is a low percentage of isopropanol in either ethyl acetate or dichlormethane. These analytes would result in low levels of recoveries, while eluting endogenous phospholipids due to the analytes low logP values. In this drawing and hence the invention, it allows us to retain a clean extract, while improving recoveries of a greater diverse portfolio of polarities.

### Detailed description of the drawings

Figure 1 shows the -Protein precipitation extraction (PPT) of Testoterone from serum according to Example 3. More specifically, it shows how testosterone, peak at 4.25 minutes co-elutes with the ion suppressing/enhancing endogenous phospholipids peaks ranging between approximately 4 minutes to 6.5 minutes. Phospholipids are known to offset quantitation values, which results in inaccurate and imprecise quantitative results.

Figure 2 shows a representable chromatogram of despramine with retention time at 0.7 minutes and testosterone with retention time at 1.18 minutes after a conventional SLE+ extraction using a polar elution solvent, acetonitrile. More specifically, it shows how acetonitrile elutes analytes desipramine (first peak at 0.7 minutes) and testosterone (second peak at 1.18 minutes), but also elutes endogenous interferences of phospholipids (peaks appearing in the range of 3.5 minutes to 6.5 minutes).

Figure 3 shows a comparable chromatogram of an extraction according to the invention using a 3-layered column (salt- SLE+ material-PLD+ material). It demonstrates the effective removal of endogenous phospholipids from a serum matrix, while affording similar recoveries relative to the conventional SLE+ (Figure 2).

Figure 4 shows a representable chromatrogram of a 200ng/mL spiked blank without extraction and without matrix. The height intensities of the peaks represent 100% total recoveries. Epinephrine height intensity = 1.6e5, Dopamine height = 7e5, Gabapentine height intensity = 1.7e5, Mycophenolic Acid-Glucuronide height intensity = 1.5e4, Mycophenolic Acid height intensity = 3e4

Figure 5 shows a representable chromatogram of a 200ng/mL spiked serum extracted using the invention. The height intensities of the peaks represent what was lost during either the extration or ion suppression caused by endogenous interferences that might have co-eluted with the analytes. Epinephrine height intensity = 2e4, Dopamine height intesity = 8.2e4, Gabapentine height intensity = 1.7e5, Mycophenolic Acid-Glucuronide height intensity = 1.5e4, Mycophenolic Acid height intensity = 3e4. Since the chromatograms are reverse phase and therefore peaks generally elute from most polars early and non-polars later; it is evident that yields are quantitative starting with analytes that are as polar as Gabapentine and later. The chromatogram also shows a significant reduction in phospholipids when compared to PPT extraction (Figure 1) or the prior art of conventional SLE+ when extracting with a polar organic solvent such as acetonitrile (Figure 2)

### EXPERIMENTAL PART

The present examples are presented for illustrative purposes only, and should not be construed as limiting the invention as defined by the appended claims.

### Example 1

This example shows the extraction of the analytes despramine and/or testoterone from serum using the PPT (Fig. 1) and conventional SLE+ (Fig. 2), but with the effects of eluting with acetonitrile. These experiments compares how endogenous phospholipids are completely extracted with the analytes in both PPT and conventional SLE+ (when using acetonitrile for elution) and hence demonstrate the invention's capacity to effectivily remove endogenous phospholipids that are present in the first two extractions (Fig. 1 and 2)

Experimental extraction procedure:

### PPT:

1. Using a 1mL pipettor along with a 1mL pipette tip, add 1mL of 2% Formic acid into a 2mL eppindorf tube
2. Create a working standard mix concentration of testosterone and despiramine at 1000ng/mL, such that 50uL of which would be considered the "spiked serum"
3. Spike in 250uL of spiked serum (created from step 2) and vortex for 30 seconds
4. Centrifuge at 2k rpm's and remove majority of supernatant into a 13 x100mm culture tube
5. Dry down with a gentle stream of nitrogen gas at 37°C until completely free of solvents visually with the use of a TurboVap LV
6. Add 200uL of 50:50 methanol:water to recon
7. Gently shake for 2 minutes
8. Inject unto an Agilent 1200 LC with AB Sciex 4000 Qtrap with the appropriate methodology

### Conventional SLE+ (using acetonitrile as the elution solvent):

1. Create a 1000ng/mL working standard of testosterone and despriamine, such that 50uL of the working standard into 200uL of serum would create a 200ng/mL "spiked serum"
2. Premix into an eppindorf tube 250uL of 200ng/mL spiked serum with 100uL of saturated sodium chloride in water (brine solution) and vortex for 10 seconds.
3. Load the entire premix from step 2 unto a 400uL, 3mL SLE+ cartridge (Biotage Part # 820-0055-BG). If contents does not penetrate frit, apply 20psi of positive pressure for 1 second.
4. Wait 5 minutes for the sample to diffuse through the SLE+ sorbent bed
5. Elute with 3 x 1mL's of acetonitrile under gravity
6. Collect the extract into a 13 x 100mm culture tube
7. Dry down using a gentle stream of nitrogen at 37°C with the use of a TurboVap LV until the tube is completely free of solvents visually.
8. Add 200uL of 50:50 methanol:water to reconstitute the sample into solution
9. Gently shake for 2 minutes
10. Inject unto an Agilent 1200 LC with AB Sciex 4000 Qtrap with the appropriate methodology.

Procedure used to compare Biotage Isolute SLE+ (Biotage Part # = 820-0055-BG) to the present invention
1. First pre-mix 200uL of serum (Golden West Biologics part # MSG-1000) with 50uL of 200ng/mL standards of Epinephrine, Dopamine HCl, Gabapentine, Mycophenolic Acid-Glucuronide, Desipramine, Mycophenolic Acid and Testoterone. Standards were prepared by dissolving into Acetonitrile at 200ng/mL concentrations for the analytes for a total volume of 250uL.
2. Load premixed sample from step 1) unto Invention bed and allow to absorb through the hydrophobic frit via gravity. The acetonitrile content in the premix allows the matrix to pass through a hydrophobic frit
3. Once premixed serum has passed through the frit, allow 10 minutes for the serum to become saturated with NaCl from the top layer of the bed
4. Then elute analytes: Epinephrine, Dopamine, Gabapentine, Mycophenolic Acid-Glucuronide, Desipramine, Mycophenolic Acid and Testosterone using 3 x 1mL aliquotes of a 2% Formic Acid in acetonitrile solution. Each 1mL aliquote is allowed to flow under gravity before subsequent aliquotes were added, and a positive pressure of Nitrogen gas from a Positive Pressure manifold (Biotage Part # = PPM-48) is applied on top of the cartridge to help elute the acidified acetonitrile layer passing through the cartridge. Also a flow rate of 1 drip per second was controlled. Due to the saturation of the acqeous serum matrix, acetonitrile is now immicsible with the saturated serum, while gaining the benefits of its polority to pull out lower logP valued compounds from the more polar matrix layer.
5. Approximately 2.7mL's of eluant was recovered in a 13 x 100mm culture tube and subsequently dried down to dryness. The dryed extract should not contain a pink or red tint and barely visible to the human eye, residue should remain.
6. 200uL's of 30% Methanol in H2O was used to reconstitute the residue and vortexed to ensure sample has been dissolvated into the solvent.
7. 5uL was injected unto an Agilent 1260 series LC with a AB Sciex 4000 Qtrap

### Example 2

This is a comparative example between Conventional SLE+ vs the invention of the 3-layered column, while both extraction strategies use acetonitrile for elution.
Both procedures following the same protocol depicts in the conventional SLE+ when using a polar solvent, acetonitrile, results in endogenous phospholipids eluting with analytes (Fig 2). However, when the invention is applied to the same procedure and the use of acetonitrile, it results in significant removal of endogenous phospholipids (Fig 3). Also noted was a pink tint to the acetonitrile elution through the conventional SLE+, where as the Invention 3-layered column was clear and colorless even after drydown.

### Experimental Extraction Procedure:

Conventional SLE+ and the Invention of the 3-layered column (using acetonitrile as the elution solvent for both procedures):
1. Create a 1000ng/mL working standard of testosterone and despriamine, such that 50uL of the working standard into 200uL of serum would create a 200ng/mL "spiked serum"
2. Premix into an eppindorf tube 250uL of 200ng/mL spiked serum with 100uL of saturated sodium chloride in water (brine solution) and vortex for 10 seconds.
3. Load the entire premix from step 2 unto a 400uL, 3mL SLE+ cartridge (Biotage Part # 820-0055-BG). If contents does not penetrate frit, apply 20psi of positive pressure for 1 second.
4. Wait 5 minutes for the sample to diffuse through the SLE+ sorbent bed
5. Elute with 3 x 1mL's of acetonitrile under gravity
6. Collect the extract into a 13 x 100mm culture tube
7. Dry down using a gentle stream of nitrogen at 37°C with the use of a TurboVap LV until the tube is completely free of solvents visually.
8. Add 200uL of 50:50 methanol:water to reconstitute the sample into solution
9. Gently shake for 2 minutes
10. Inject unto an Agilent 1200 LC with AB Sciex 4000 Qtrap with the appropriate methodology.
Procedure used to compare Biotage Isolute SLE+ (Biotage Part # = 820-0055-BG) to the present invention

### Example 3

This is a comparison of recoveries and endogenous phospholipids for an array of polar analytes during the extraction of Epinephrine, Dopamine, Gabapentine, Mycophenolic Acid-Glucuronide, Desipramine, Mycophenolic Acid from serum using Invention vs No extraction/no matrix

Comparative example of two extractions (Fig. 4 and 5): Figure 4 represents 100% recovery since no extraction and no matrix was incorporated. Figure 5 is to show how a gradient of polar analytes are effected by an extraction from matrix using Invention. This indicates that acetonitriles polarity has the capacity to elute polar analyte Gabapentine at approximately 100% recovery (based on height intensities), however more polar analyte Epinephrine or Dopamine results in lower recoveries (based on height intensities.

### Experimental Extraction Procedure:

Conventional SLE+ and the Invention of the 3-layered column (using acetonitrile as the elution solvent for both procedures):
1. Create a 1000ng/mL working standard of testosterone and despriamine, such that 50uL of the working standard into 200uL of serum would create a 200ng/mL "spiked serum"
2. Premix into an eppindorf tube 250uL of 200ng/mL spiked serum with 100uL of saturated sodium chloride in water (brine solution) and vortex for 10 seconds.
3. Load the entire premix from step 2 unto a 400uL, 3mL SLE+ cartridge (Biotage Part # 820-0055-BG). If contents does not penetrate frit, apply 20psi of positive pressure for 1 second.
4. Wait 5 minutes for the sample to diffuse through the SLE+ sorbent bed
5. Elute with 3 x 1mL's of acetonitrile under gravity
6. Collect the extract into a 13 x 100mm culture tube
7. Dry down using a gentle stream of nitrogen at 37°C with the use of a TurboVap LV until the tube is completely free of solvents visually.
8. Add 200uL of 50:50 methanol:water to reconstitute the sample into solution
9. Gently shake for 2 minutes
10. Inject unto an Agilent 1200 LC with AB Sciex 4000 Qtrap with the appropriate methodology.
Procedure used to compare Biotage Isolute SLE+ (Biotage Part # = 820-0055-BG) to the present invention

### Agilent 1200 LC with AB Sciex 4000 Qtrap Methodology:

Retention times and MRM transitions of analytes of polar analyte suite from figure 4 and 5:
0.6 min = Epinephrine [184.1>166.1]
0.7 min = Dopamine [154.3> 137.3]
1.4 min = Gabapentine [172>154]
3.3 min = Mycophenolic Acid- Glucuronide [514.2>207.1]
3.5 min = Desipramine [267.2>72]
3.7 min = Mycophenolic Acid [321>207.1]

### Agilent LC Pump Method Properties

| Pump Model: | Agilent 1260 Binary Pump | | | |
|---|---|---|---|---|
| Minimum Pressure (psi): | 0.0 | | | |
| Maximum Pressure (psi): | 8702.0 | | | |
| Dead Volume (µl): | 40.0 | | | |
| Maximum Flow Ramp (ml/min²): | | 100.0 | | |
| Maximum Pressure Ramp (psi/sec): | | 290.0 | | |
| Max Flow Ramp Up (ml/min²): | | 100.0 | | |
| Max Flow Ramp Dn (ml/min²): | | 100.0 | | |
| | | | | |

| Step Table: | | | | |
|---|---|---|---|---|
| Step | Total Time(min) | Flow Rate(µl/min) | A %) | B(%) |
| 0 | 0.00 | 400 | 40.0 | 60.0 |
| 1 | 1.00 | 400 | 0.0 | 100.0 |
| 2 | 4.00 | 400 | 0.0 | 100.0 |
| 3 | 4.01 | 400 | 40.0 | 60.0 |
| 4 | 8.00 | 400 | 40.0 | 60.0 |
| | | | | |
| Left Compressibility: | 50.0 | | | |
| Right Compressibility: | 115.0 | | | |
| Left Dead Volume (µl): | 40.0 | | | |
| Right Dead Volume (µl): | 40.0 | | | |
| Left Stroke Volume (µl): | -1.0 | | | |
| Right Stroke Volume (µl): | -1.0 | | | |
| Left Solvent: | A2 | | | |
| Right Solvent: | B2 | | | |

### Materials and method:

Procedure for Packing the Biotage Enhanced ISOLUTE® SLE+ cartridge (available from http://www.biotage.com/):

### Materials required for packing Invention:

1. Phase Separator from Biotage (Biotage part # 1201903-BG)
2. PLD+ Sorbent (Biotage part # 918-0050-P01). PLD+ sorbent is removed from a 96 well plate using a pin to push out from the bottom outlet. Several wells of PLD+ sorbent was removed to accommodate a mass load of 100mg of PLD+ sorbent for Invention cartridge
3. SLE+ Sorbent (Biotage part # 820-0055-B). SLE+ sorbent was removed from a 3mL cartridge barel from the part number indicated. 550mg per cartridge was collected for Invention
4. Hydrophobic frits (Biotage part # 120-1033-B). These hydrophobic frits were obtained directly from Biotage and used as is.
5. 8mm outer diameter wooden doll rod was acquired from a local hard ware store and used as is.

### Procedure for Packing The Invention

1. On top of the hydrophobic frit inside the phase separator, 100mg of ISOLUTE® PLD+ sorbent extracted from Biotage part # 918-0050-P01 is carefully loaded with an even and level bed and a hydrophobic frit is compressed on top and lightly tampered down with a doll rod.
2. 550mg of the Biotage Isolute SLE+ sorbent (material acquired from the Biotage part # 820-0055-B) is then loaded on top of the leveled frit above the Isolute PLD+ bed and again is even and leveled. A hydrophobic frit is again pushed on top of the SLE+ bed and tampered down using a doll rod
3. Finally, 250mg of NaCl is loaded on top of the SLE+ bed and again, evened and leveled using a hydrophobic frit on top and compressed with a doll rod.
All three layers should consume the volume of approximately 60% of a 3mL cartridge; allowing enough space above to load at least 1mL volume aliquotes of solvent on top without overfill.

### Standards Obtained for spiking solutions:

Epinephrine (Sigma Aldrich part # E4642)
Dopamine HCl (Cerilliant part # D-081)
Gabapentine (Sigma Aldrich part # 1287303-250MG)
Mycophenolic Acid- Glucuronide (Cerilliant part # M-135)
Desipramine HCl (Cerilliant part # D-906)
Mycophenolic Acid (Cerilliant part # M-106)
Testosterone (Sigma Aldrich part # T-037)

### Eluant:

Acetonitrile (Fisher Optima part # A955-4)
Formic Acid (Fisher Optima LC-MS grade part # A117-50)

## Claims

1. A method of supported liquid extraction (SLE), wherein adsorption of an aqueous sample onto an inert aqueous phase is performed in the presence of added salt.

2. A method according to claim 1, wherein one or more analytes are extracted by contacting an organic phase comprising at least one polar solvent with the inert phase.

3. A method according to claim 1 or 2, comprising the steps of
a) providing an aqueous sample comprising one or more analytes;
b) contacting the sample with an inert aqueous phase contained in a cartridge;
c) allowing sufficient time for the sample to be adsorbed on the inert aqueous phase; and
d) passing an organic phase comprising at least one polar solvent through the inert aqueous phase to extract at least one analyte;
wherein salt is added in step a) and/or b).

4. A method according to any one of the preceding claims, wherein the inert aqueous phase comprises diatomaceous earth.

5. A method according to any one of the preceding claims, wherein at least one polar solvent is selected from the group consisting of acetonitrile, isopropyl alcohol, ethyl acetate, methyl tert-butyl ether, toluene, petroleum ether, acetone, dimethyl formate, dimethoxysulphate, dichlormethane, hexanes, heptanes, pentanes, tetrahydrofuran, ethyl alcohol, methanol, butyl alcohols, or a mixture of two or more thereof.

6. A method according to any one of the preceding claims, wherein the aqueous sample is selected from the group consisting of urine; saliva; whole blood; and blood serum.

7. A method according to any one of the preceding claims, wherein the method also comprises a step of removing phospholipids from the extract resulting from step d).

8. A cartridge for supported liquid extraction (SLE), which includes at least two separate compartments, one of which holds an inert aqueous phase and one of which holds a salt or mixture of salts.

9. A cartridge according to claim 8, which includes an opening for feeding a liquid into the cartridge which opening is directly connected to the salt compartment.

10. A cartridge according to claim 8 or 9, which includes an outlet for removing liquid which outlet is connected to the inert aqueous phase compartment.

11. A cartridge according to any one of claims 8-10, which includes an additional compartment holding an inert phase capable of binding non-analyte components such as proteins, peptides and/or phospholipids.

12. A cartridge according to claim 11, wherein the additional compartment is located between the inert aqueous phase compartment and the outlet.

13. A cartridge according to any one of claims 8-12, which includes filters at the inlet and outlet ends.

14. A cartridge according to any one of claims 8-13, wherein the inert aqueous phase compartment is packed with ISOLUTE SLE+, the additional compartment is packed with ISOLUTE PLD+ and the salt compartment comprises sodium hydroxide.
